# EUROPÄISCHE PATENTANMELDUNG

(11) **EP 0 545 298 A1**
(43) Veröffentlichungstag der Anmeldung: **09.06.1993**
(21) Anmeldenummer: 92120273.5
(22) Anmeldetag: 27.11.1992
(51) Int. Cl.: F16H 61/06

(54) **Fahrzeugantriebsstrang mit hydraulisch gesteuertem Schaltgetriebe**

(30) Priorität: 02.12.1991 US 801194
(71) Anmelder: DEERE & COMPANY, Moline, Illinois 61265 (US)
(72) Erfinder: Testerman, Michael Duane, Dearing, Kansas 67340 (US)
(74) Vertreter: Feldmann, Bernhard

(57) **Zusammenfassung**

Es wird ein Fahrzeugantriebsstrang vorgeschlagen, der ein von einer Antriebsmaschine (12) angetriebenes Schaltgetriebe (10), wenigstens eine druckbetätigbare Kupplung (20) zur Steuerung der Gangumschaltung des Schaltgetriebes (10), wenigstens ein Ventil (22) zur Einstellung des an die Kupplung (20) angelegten Hydraulikdrucks und eine Steuereinheit (24) enthält. Die Steuereinheit (24) steuert das Ventil (22) derart an, daß während einer Gangumschaltung der an die Kupplung (20) angelegte Hydraulikdruck stetig von einem Minimumdruck auf einen Maximumdruck ansteigt.

Um auch bei sich ändernden Belastungsbedingungen des Antriebsstrangs ein weiches, ruckfreies Umschalten zu ermöglichen, wird vorgeschlagen, den Minimumdruck in Abhängigkeit eines aus der Belastung gebildeten Lastparameterwertes einzustellen, der am Beginn des Kupplungsvorgangs, bei dem die Kupplungslamellen gegen den Druck einer Feder aufeinander gedrückt werden, herrscht. Der Kupplungsdruck wird dann ausgehend von dem eingestellten Minimumdruck bis zu einem Maximaldruck gesteigert, bei dem die Kupplung (20) vollständig in Eingriff ist. Die Belastung des Antriebsstranges läßt sich beispielsweise durch Messung des Drehzahlabfalls über einem im Antriebsstrang angeordneten Drehmomentenwandler (14) ermitteln.

## Beschreibung

Die Erfindung betrifft einen Fahrzeugantriebsstrang mit einem von der Antriebsmaschine angetriebenen Schaltgetriebe, wenigstens einer druckbetätigbaren Kupplung zur Steuerung der Gangumschaltung des Schaltgetriebes, wenigstens einem Ventil zur Einstellung des an die Kupplung angelegten Hydraulikdrucks und mit einer Steuereinheit, die das Ventil derart ansteuert, daß während einer Gangumschaltung der an die Kupplung angelegte Hydraulikdruck stetig von einem Minimumdruck auf einen Maximumdruck ansteigt. Das Schaltgetriebe kann beispielsweise ein Lastschaltgetriebe (Powershift) sein, wie es bei industriellen oder landwirtschaftlichen Fahrzeugen, beispielsweise bei größeren Ackerschleppern Anwendung findet.

Es sind automatische Steuersysteme für Lastschaltgetriebe von Fahrzeugen bekannt, die durch hydraulisch steuerbare Kupplungen betätigt werden. Die Kupplungen ihrerseits werden durch elektrohydraulische Ventile angesteuert. Einige Gesichtspunkte dieser Technologie sind durch Goodbar und Testermann in "The Design and Development of a Four Speed Powershift Transmission with Electric Clutch Pressure Modulation", SEA Technical Paper No. 861212 (1986) beschrieben. Ein derartiges Steuersystem auf Mikroprozessorbasis wurde ferner durch die US-A-4,855,913 beschrieben. Durch beide Veröffentlichungen ist es bekannt, den Kupplungsdruck so anzusteuern oder allmählich zu steigern, daß sich ein weiches Einkuppeln ergibt. Diese Getriebesteuerungen wurden insbesondere für Bedingungen geschaffen, bei denen unter schweren Belastungen geschaltet werden muß. Beim Schalten unter geringen Belastungen erfolgt der Kuppelvorgang jedoch plötzlich und ruckweise.

Durch die US-A-4,836,057 ist ein Getriebeantriebsstrang der eingangs genannten Art bekannt geworden, bei dem der Anstieg des Kupplungsdrucks in Abhängigkeit von dem Fahrzeuggewicht und einem Parameter eingestellt wird, der mit Geschwindigkeitsreduktionsverhältniskonstante bezeichnet ist. Hierdurch soll das Auftreten plötzlicher und ruckweiser Drehzahländerungen beim Schalten begrenzt werden.

Keines der bekannten Steuersysteme ermöglicht jedoch eine Einstellung des Kupplungsdrucks, durch die Änderungen des Belastungsgrades des Antriebsstranges ausgeglichen werden können.

Die der Erfindung zugrunde liegende Aufgabe wird darin gesehen, einen Fahrzeugantriebsstrang der eingangs genannten Art anzugeben, durch den auch bei sich ändernden Belastungsbedingungen ein weiches, ruckfreies Umschalten möglich ist.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Erfindungsgemäß wird die Belastung des Antriebsstrangs, beispielsweise das übertragene Drehmoment oder eine hiermit zusammenhängende Größe, ermittelt. In Abhängigkeit eines aus der Belastung gebildeten Lastparameterwertes wird der Minimumdruck eingestellt, der am Beginn des Kupplungsvorgangs, bei dem die Kupplungslamellen gegen den Druck einer Feder aufeinander gedrückt werden, herrscht. Der Kupplungsdruck wird dann, ausgehend von dem eingestellten Minimumdruck, bis zu einem Maximaldruck gesteigert, bei dem die Kupplung vollständig in Eingriff ist.

Durch die Anpassung des anfänglichen Minimumdrucks an die Lastbedingungen läßt sich für alle Belastungsbedingungen ein weiches, ruckfreies Einkuppeln erreichen.

Vorzugsweise steigt der Lastparameter und mit ihm der Minimumdruck mit der Belastung an.

Eine bevorzugte Ausgestaltung der Erfindung schlägt vor, die Anstiegsgeschwindigkeit des Hydraulikdrucks in Abhängigkeit von dem Lastparameter einzustellen. Dabei wird zweckmäßigerweise mit abnehmendem Lastparameter ein kleinerer Änderungsgeschwindigkeitswert eingestellt. Diese Maßnahme unterstützt die sich bei Anwendung der Erfindung ergebende Eigenschaft des weichen und ruckfreien Einkuppelns.

Vorzugsweise findet die Erfindung bei einem Fahrzeugantriebsstrang Anwendung, bei dem zwischen der Antriebsmaschine und dem Schaltgetriebe ein Drehmomentenwandler angeordnet ist. Durch Messung der Eingangsdrehzahl und der Ausgangsdrehzahl kann ein Parameter ermittelt werden, der die Belastung des Antriebsstrangs wiederspiegelt. Aus der Ausgangsdrehzahl und der Eingangsdrehzahl wird ein Drehzahlverhältnis errechnet, aus dem der Lastparameterwert gebildet wird. Dabei wird der Lastparameterwert zweckmäßigerweise aus einer linearen Funktion des Drehzahlverhältnisses abgeleitet.

Ferner ist es vorteilhaft, wenn ein Minimumdruckwert und/oder ein Änderungsgeschwindigkeitswert aus einer linearen Funktion des Lastparameters oder des Drehzahlverhältnisses gebildet wird.

Eine weitere Ausgestaltung der Erfindung sieht vor, daß während einer Schnellfüllzeitdauer unmittelbar vor der Einstellung des Minimumdrucks ein hoher Hydraulikdruck an die Kupplung angelegt wird, um die Kupplung zunächst schnell zu füllen, bevor der eigentliche Kupplungsvorgang eingeleitet wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein vereinfachtes schematisches Diagramm eines Steuersystems für ein Fahrzeuggetriebe,
- Fig. 2: ein vereinfachtes Flußdiagramm des Algorithmus, den die in Fig. 1 dargestellte elektronische Steuereinheit ausführt,
- Fig. 3: eine graphische Darstellung des Zusammenhanges zwischen einem Lastfaktorwert und dem Drehzahlverhältnis des Drehmomentenwandlers und
- Fig. 4: eine graphische Darstellung, die für einen Bereich von Lastfaktorwerten zeigt, wie sich das Pulspausenverhältnis des Ventilansteuersignals während eines Getriebeschaltvorganges in Abhängigkeit von der Zeit ändert.

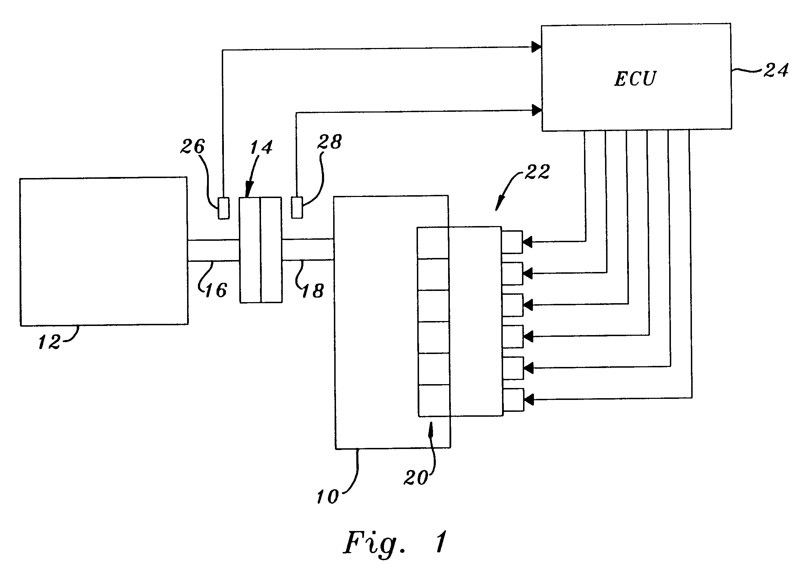

In Fig. 1 ist das Lastschaltgetriebe 10 eines Fahrzeuges angedeutet, welches durch die Antriebsmaschine 12 des Fahrzeuges angetrieben wird. Die Antriebsmaschine 12 steht mit dem Lastschaltgetriebe 10 über einen Drehmomentenwandler 14, der eine mit der Antriebsmaschine 12 verbundene Eingangswelle 16 und eine mit dem Lastschaltgetriebe 10 verbundene Ausgangswelle 18 aufweist, in Verbindung. Das Lastschaltgetriebe 10 enthält eine Vielzahl druckbetätigbarer Kupplungen 20, durch die sich Gangwechsel des Lastschaltgetriebes 10 vornehmen lassen. Die Kupplungen 20 werden durch elektrohydraulische pulsgesteuerte Schaltventile 22 betätigt. Der Druck wird den pulsgesteuerten Schaltventilen 22 durch ein nicht gezeigtes Proportionalventil zugeführt. Die Schaltventile 22 werden ihrerseits durch eine elektronische Steuereinheit (ECU) 24, die gepulste Signale abgibt, angesteuert. Mit zunehmendem Pulspausenverhältnis sinkt der an die Kupplungen 20, die drucklos geschlossen sind, angelegte Druck. Bei den bisher beschriebenen Bauteilen handelt es sich um bekannte Elemente, wie sie beispielsweise in der US-A-4,855,913 beschrieben wurden.

Gemäß der vorliegenden Erfindung sind ein Drehzahlsensor 26, der die Drehzahl der Eingangswelle 16 des Drehmomentenwandlers 14 erfaßt, und ein Drehzahlsensor 28, der die Drehzahl der Ausgangswelle 18 des Drehmomentenwandlers 14 erfaßt, vorgesehen.

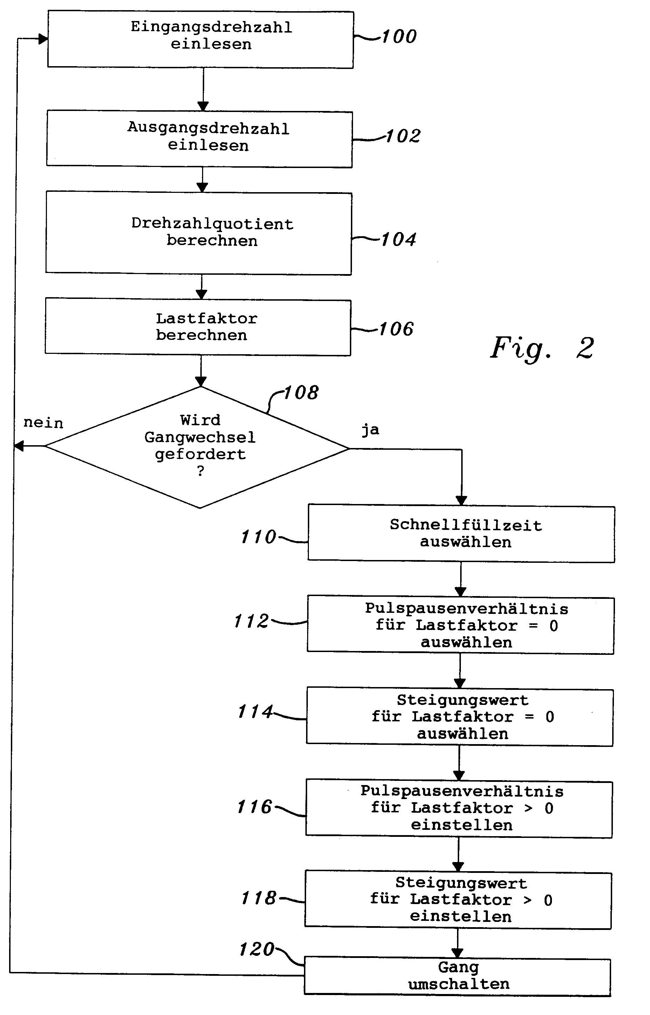

Die elektronische Steuereinheit 24 empfängt die Signale der beiden Drehzahlsensoren 26, 28 und erzeugt Ausgangssignale für die Getriebesteuerventile 22. Die Ausgangssignale werden durch die elektronische Steuereinheit 24 von den ermittelten Drehzahlsignalen gemäß eines Algorithmus ermittelt, wie er aus Fig. 2 hervorgeht.

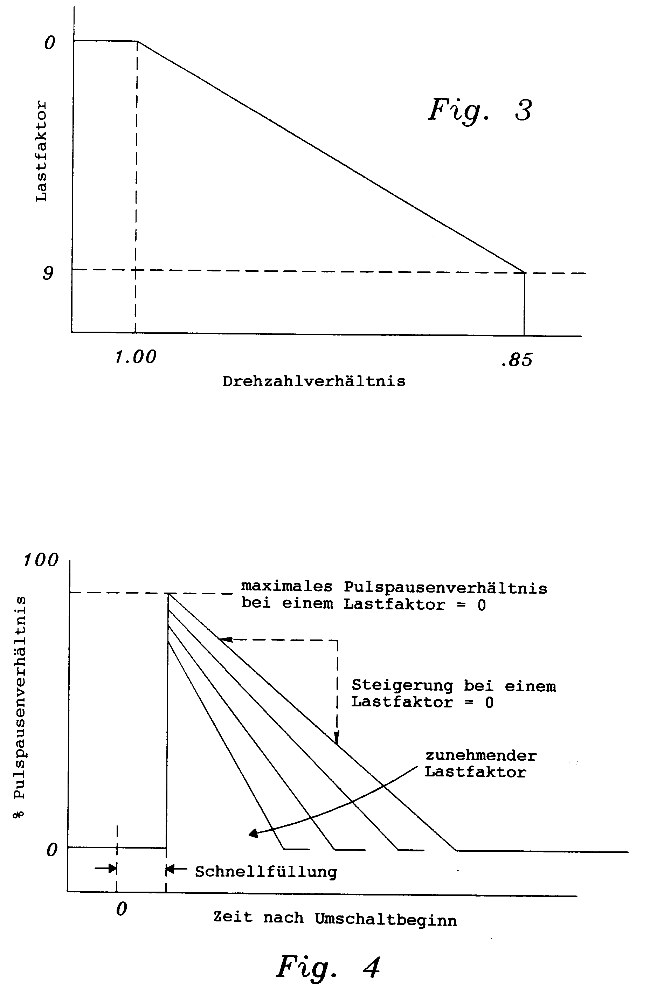

Der in Fig. 2 dargestellte Algorithmus beginnt mit den Schritten 100 und 102, in welchen die von den beiden Drehzahlsensoren 26, 28 erfaßten Werte eingelesen werden. Dann wird in Schritt 104 ein Drehzahlverhältniswert aus dem Quotienten der Drehzahl der Ausgangswelle 18 geteilt durch die Drehzahl der Eingangswelle 16 des Drehmomentenwandlers 14 ermittelt. Als nächstes wird in Schritt 106 ein Lastfaktorwert als lineare Funktion aus dem in Schritt 104 ermittelten Drehzahlverhältniswert gewonnen. Dieser lineare Zusammenhang ist in Fig. 3 graphisch dargestellt. Beispielsweise ist das Drehzahlverhältnis 1.00, wenn die Ausgangswelle 18 sich mit der gleichen Drehzahl dreht wie die Eingangswelle 16. Dies bedeutet, daß keine Last über dem Drehmomentenwandler 14 abfällt und dem Lastfaktor der Wert Null zugeordnet ist. Der Lastfaktor steigt linear mit abnehmendem Drehzahlverhältnis bis zu dem Lastfaktorwert 9.0 an, der einem Drehzahlverhältnis von 0.85 und einer schwereren Belastung des Drehmomentenwandlers 14 entspricht. Für schwerere Belastungen, die einem Drehzahlverhältnis von weniger als 0.85 entsprechen, bleibt der Lastfaktor konstant bei 9.0.

In Schritt 108 wird festgestellt, ob eine Umschaltung des Getriebes 10 beispielsweise durch die Bedienungsperson oder infolge sich ändernder Bedingungen gewünscht ist. Wird eine Umschaltung gewünscht, so folgt der Algorithmus den Schritten 110 bis 114, andernfalls wird der Algorithmus wieder auf Schritt 100 zurückgestellt.

In Schritt 110 wird aus einer Wertetabelle, die in dem Speicher der Steuereinheit abgelegt ist, für eine bestimmte druckbetätigbare Kupplung 20 ein zugehöriger Schnellfüllzeitwert ausgewählt. Dieser Schnellfüllzeitwert entspricht der Zeitdauer, während der die druckbetätigbare Kupplung 20 unter vollen Druck gesetzt werden muß, um ihre nicht dargestellten Kupplungselemente in Anlageposition zu bringen. Die Schnellfüllzeitwerte können für jede Kupplung experimentell oder auf andere Weise ermittelt werden.

In Schritt 112 wird aus einer Wertetabelle, die in dem Speicher der Steuereinheit abgelegt ist, für eine bestimmte druckbetätigbare Kupplung 20 ein zugehöriger Maximalwert für das Pulspausenverhältnis ausgewählt, der einem Lastfaktor von Null entspricht. Dieser Maximalwert für das Pulspausenverhältnis entspricht einem Mindestdruck, der nach Ablauf der Schnellfüllzeit unter der Voraussetzung, daß die Last Null ist, an die druckbetätigbare Kupplung 20 angelegt werden würde.

Dann wird in Schritt 114 aus einer Wertetabelle, die in dem Speicher der Steuereinheit abgelegt ist, für eine bestimmte druckbetätigbare Kupplung 20 ein Steigungswert ausgewählt, der einem Lastfaktor von Null zugeordnet ist. Dieser Steigungswert entspricht der Steigerungsgeschwindigkeit des Drucks, der nach Ablauf der Schnellfüllzeit an die druckbetätigbare Kupplung 20 angelegt werden würde, unter der Voraussetzung, daß wiederum die Last Null wäre. Die Steigerungsgeschwindigkeit legt die Zeitdauer fest, die zwischen dem an die Kupplung 20 angelegten Minimumdruck und dem Maximumdruck vergeht.

In Schritt 116 wird dann der Maximalwert des Pulspausenverhältnisses, der in Schritt 112 ausgewählt wurde, eingestellt oder für steigende Lastfaktorwerte vermindert. Folglich gilt: je höher die Belastung, desto größer wird der (unmittelbar nach der Schnellfüllung) an die Kupplung 20 angelegte Druck sein, und umgekehrt: je geringer die Belastung, desto kleiner wird der Druck sein, der (unmittelbar nach der Schnellfüllung) an die Kupplung 20 angelegt wird.

In Schritt 118 wird der Steigungswert, der in Schritt 114 ausgewählt wurde, eingestellt oder für steigende Lastfaktorwerte erhöht. Damit gilt: je höher die Belastung ist, desto schneller nimmt der Druck zu, der an die Kupplung 20 angelegt wird, und umgekehrt: je geringer die Belastung ist, desto langsamer steigt der an die Kupplung 20 angelegte Druck an.

Im Anschluß an Schritt 118 veranlaßt Schritt 120 das Getriebe 10 zu einem Gangwechsel, der einer zeitlichen Kupplungsdruckcharakteristik folgt, die dem zeitlichen Verlauf des Pulspausenverhältnisses, wie es in Fig. 4 dargestellt ist, entspricht. Nachdem ein Gangwechsel ausgeführt wurde, kehrt der Algorithmus wieder zu Schritt 100 zurück. Fig. 4 zeigt, wie das zeitabhängige Pulspausenverhältnis sich als Funktion des Lastfaktors ändert. Es ist dargestellt, daß die Umschaltansteuerung für die Kupplung in drei Phasen erfolgt:
1. Schnellfüllphase, während der der volle Druck an die Kupplung angelegt wird, um diese schnell zu füllen.
2. Unmittelbar im Anschluß an die Schnellfüllphase wird ein lastabhängiger minimaler Kupplungsdruck an die Kupplung angelegt.
3. Dann wird der Kupplungsdruck von dem minimalen Kupplungsdruckwert stetig bis zu einem bestimmten maximalen Druck erhöht, wobei die Steigerungsrate von der Last abhängt.

Durch diese Maßnahmen läßt sich das Getriebe unter allen Lastbedingungen bequem schalten.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

Beispielsweise braucht bei anderen Anwendungen die Beziehung zwischen dem Drehzahlverhältnis des Drehmomentenwandlers und dem Lastfaktor nicht linear zu sein. Ferner läßt sich der Kupplungsdruck auch in Abhängigkeit von anderen Parametern, wie beispielsweise der Antriebsmaschinendrehzahl ansteuern. Es ist auch möglich, die Last bei Antriebssträngen zu ermitteln, die keinen Drehmomentenwandler enthalten. Ferner kann die vorliegende Erfindung auch bei Systemen Anwendung finden, bei denen jede Kupplung durch ein eigenes Proportionalventil angesteuert wird.

## Patentansprüche

1. Fahrzeugantriebsstrang mit einem von der Antriebsmaschine (12) angetriebenen Schaltgetriebe (10), wenigstens einer druckbetätigbaren Kupplung (20) zur Steuerung der Gangumschaltung des Schaltgetriebes (10), wenigstens einem Ventil (22) zur Einstellung des an die Kupplung (20) angelegten Hydraulikdrucks und einer Steuereinheit (24), die das Ventil (22) derart ansteuert, daß während einer Gangumschaltung der an die Kupplung (20) angelegte Hydraulikdruck stetig von einem Minimumdruck auf einen Maximumdruck ansteigt, gekennzeichnet durch Mittel zur Erfassung eines Lastparameters, der von der Belastung des Antriebsstrangs abhängt, und durch Mittel, durch die ein Minimumdruckwert in Abhängigkeit von dem Lastparameter gebildet wird.

2. Fahrzeugantriebsstrang nach Anspruch 1, dadurch gekennzeichnet, daß der Minimumdruck mit abnehmendem Lastparameter abnimmt.

3. Fahrzeugantriebsstrang nach Anspruch 1 oder 2, gekennzeichnet durch Mittel, durch die die Anstiegsgeschwindigkeit des Hydraulikdrucks in Abhängigkeit von dem Lastparameter eingestellt wird.

4. Fahrzeugantriebsstrang nach Anspruch 3, dadurch gekennzeichnet, daß mit abnehmendem Lastparameter ein kleinerer Änderungsgeschwindigkeitswert eingestellt wird.

5. Fahrzeugantriebsstrang nach einem der Ansprüche 1 bis 4, dadurch gekennzeichnet, daß zwischen Antriebsmaschine (12) und Schaltgetriebe (10) ein Drehmomentenwandler (14) angeordnet ist, dessen Eingangswelle (16) mit der Antriebsmaschine (12) und dessen Ausgangswelle (18) mit dem Schaltgetriebe (10) verbunden ist, daß die Drehzahl der Eingangswelle (16) und die der Ausgangswelle (18) je durch einen Drehzahlmesser (26, 28) erfaßt werden und daß Mittel vorgesehen sind, die das Drehzahlverhältnis von Ausgangswelle (18) und Eingangswelle (16) bilden und hieraus den Lastparameter bestimmen.

6. Fahrzeugantriebsstrang nach Anspruch 5, dadurch gekennzeichnet, daß ein Lastparameterwert als lineare Funktion des Drehzahlverhältnisses gebildet wird.

7. Fahrzeugantriebsstrang nach einem der Ansprüche 1 bis 6, dadurch gekennzeichnet, daß ein Minimumdruckwert und/oder ein Änderungsgeschwindigkeitswert als Funktion des Lastparameters gebildet wird.

8. Fahrzeugantriebsstrang nach einem der Ansprüche 5 bis 7, dadurch gekennzeichnet, daß ein Minimumdruckwert und/oder ein Anstiegsgeschwindigkeitwert des Hydraulikdrucks als Funktion des Drehzahlverhältnisses gebildet werden.

9. Fahrzeugantriebsstrang nach Anspruch 6 oder 7, dadurch gekennzeichnet, daß ein Minimumdruckwert und/oder ein Anstiegsgeschwindigkeitwert des Hydraulikdrucks als proportionale Funktion des Drehzahlverhältnisses oder des Lastparameterwerts gebildet wird.

10. Fahrzeugantriebsstrang nach einem der Ansprüche 1 bis 9, dadurch gekennzeichnet, daß Mittel vorgesehen sind, die während einer Schnellfüllzeitdauer vor der Einstellung des Minimumdrucks einen hohen Hydraulikdruck an die Kupplung anlegen.
